Europäisches Patentamt

European Patent Office

Office européen des brevets

(19)

(11) EP 0 525 340 B1

## (12) EUROPÄISCHE PATENTSCHRIFT

(45) Veröffentlichungstag und Bekanntmachung des Hinweises auf die Patenterteilung:
**28.08.1996 Patentblatt 1996/35**

(51) Int Cl.$^6$: **G03B 15/05**, H05B 41/30

(21) Anmeldenummer: **92109747.3**

(22) Anmeldetag: **10.06.1992**

(54) **Verfahren zur Steuerung eines Blitzgerätes sowie Blitzgerät, insbesondere Studioblitzanlage**

Control-method of a strobe, and flashlight device, in particular a studio flashlight

Procédé de contrôle d'un flash, et dispositif à flash, notamment une disposition d'un flash de studio

(84) Benannte Vertragsstaaten:
**AT BE CH DE DK ES FR GB GR IT LI LU MC NL PT SE**

(30) Priorität: **31.07.1991 DE 4125322**

(43) Veröffentlichungstag der Anmeldung:
**03.02.1993 Patentblatt 1993/05**

(73) Patentinhaber: **STUDIOTECHNIK HENSEL VERTRIEBS GmbH**
**D-97076 Würzburg (DE)**

(72) Erfinder: **Renschke, Joachim Dipl.-Ing.**
**W-8700 Würzburg (DE)**

(74) Vertreter:
**Hafner, Dieter, Dr.rer.nat., Dipl.-Phys. et al**
**Dr. Hafner & Stippl,**
**Patentanwälte,**
**Ostendstrasse 132**
**90482 Nürnberg (DE)**

(56) Entgegenhaltungen:
**EP-A- 0 240 789          FR-A- 2 652 478**

• **PATENT ABSTRACTS OF JAPAN vol. 7, no. 154 (E-185)6. Juli 1983 & JP A 58061690**

**Beschreibung**

Die Erfindung betrifft zunächst ein Verfahren zur Steuerung eines Blitzgerätes, insbesondere einer aus über einem Blitzgenerator angesteuerten Blitzköpfen gebildeten Studioblitzanlage.

Stand der Technik:

Im Bereich der professionellen Studiofotografie werden häufig Blitzgeräte in Form von Studioblitzanlagen verwendet. Derartige Blitzanlagen bestehen in der Regel aus einer Mehrzahl von sogenannten Blitzköpfen sowie einem Blitzgenerator, an den die Blitzköpfe angeschlossen sind.

Die in den Blitzköpfen enthaltenen Xenongas-Blitzröhren geben Blitzlicht mit einer Farbtemperatur mit einem Mittelwert von etwa 5.500 ° K ab. Die Farbtemperatur von derartigen Blitzröhren ist von unterschiedlichen Faktoren abhängig; zu einem sind solche Blitzröhren in der Regel mit einer Beschichtung versehen, die beispielsweise UV-Anteile im Blitzlicht verhindern soll. Beschichtungen können sich mit zunehmendem Alter verfärben, so daß es zu Abweichungen der ursprünglich definierten Farbtemperaturwerte kommen kann. Zum anderen werden die Blitzröhren in der Regel in Verbindung mit sogenannten Lichtdiffusoren verwendet. Lichtdiffusoren können unterschiedlich ausgebildet sein, beispielsweise die Form von textilen Schirmen oder dgl. haben. Je nach Alter vergilben auch diese Diffusoren und beeinflussen damit ebenfalls die Farbtemperatur.

Darüber hinaus ist die Farbtemperatur der verwendeten Xenonröhren auch davon abhängig, mit welcher Generatorspannung die Blitzröhre beaufschlagt wird. Da die einem Blitz zugeführte Gesamtenergie "E", durch die Formel $E = 1/2\, cu^2$ sowohl spannungs- als auch kapazitätsabhängig ist, läßt sich die Energie entweder über die Ladung eines Kondensators oder über seine Ladespannung beeinflussen. Im Falle der Spannungsbeeinflussung wird unbeabsichtigt eine Veränderung der Farbtemperatur herbeigeführt, so daß das sonst sonnenlichtähnliche Spektrum des ionisierten Xenongases, das beim Entladevorgang innerhalb der Röhre vorliegt, mehr oder weniger stark verfälscht wird.

Als weiterer Stand der Technik sind sogenannte Automatik-Blitzgeräte bekannt. Diese Geräte messen während des Blitzes automatisch die Objekthelligkeit und schalten - sobald für die eingestellten bzw. vorliegenden fotografischen Parameter Blende und Filmempfindlichkeit die Lichtausbeute des Blitzes ausreichend ist -, den Blitz ab. Dabei wird zwangsläufigerweise der gegenüber dem relativ kurzwelligen (blauen) Blitzimpulsanfang langwellige (rote) Blitzimpulsendbereich abgeschnitten, so daß sich die mittlere Farbtemperatur des geregelten Blitzes mehr zum blauen Bereich hin verschiebt, was ebenfalls zu einer Farbverfälschung gegenüber der ungeregelten Normalentladung führen kann.

Darüber hinaus ist es in der Studioblitztechnik bereits bekannt, zur Herbeiführung extrem kurzer Blitzzeiten, die Normalentladung gezielt auf eine ganz bestimmte Blitzdauer zu begrenzen. Durch dieses Abschneiden der Normalentladung ergibt sich ebenfalls eine ungewollte Farbtemperaturveränderung, die entweder hingenommen werden muß oder gezielt herauszufiltern ist.

Für das fotografische Ergebnis ist es von hoher Wichtigkeit, daß das Licht der Blitzquelle zur Belichtung des Films möglichst genau auf die Emulsion eines Farbfilms abgestimmt ist. Diese Abstimmung wird durch die Anpassung der Farbtemperaturkennzahl ausgedrückt. Wird die Anpassung nicht berücksichtigt, so führt dies zu einem Farbstich der Bilder, der durch Filterung zu korrigieren ist. Nachdem in der Praxis es jedoch eine Mehrzahl von Blitzlichtquellen eingesetzt werden muß und eine Filterung nur selektiv für jede Lichtquelle möglich ist, ist der Abstimmungs- und Filteraufwand bei mehreren Lichtquellen in der Regel so groß, daß er vom Fotografen kaum bewältigt werden kann. In der Regel verzichtet man deswegen auf eine genaue Abstimmung und nimmt als Ergebnis Farbstiche in Bildpartien hin, die sich teilweise sehr unschön auswirken.

Aus DE 36 12 164 ist ein Blitzlichtgerät zur Erzeugung von Blitzlicht von vorgegebener Farbtemperatur bekanntgeworden, bei welchem durch geeignete Wahl der Ladespannung und der Blitzdauer bei einer vorgegebenen Lichtmenge die gewünschte Farbtemperatur eingestellt werden kann. Jedoch ist eine wirkliche Variabilität der Farbtemperatur nur im unteren Leistungsbereich gegeben, im oberen Leistungsbereich ist die Möglichkeit der Farbtemperaturveränderung extrem eingeschränkt.

DE-PS 969 604 betrifft ferner eine elektronische Blitzlichteinrichtung mit veränderbarer Entladungsdauer, in der eine Mehrzahl von Teilkapazitäten verwendet wird, die allerdings nicht zur gezielten Farbtemperaturänderung unterschiedlich miteinander verschaltbar sind.

DE 39 32 123 betrifft ferner eine Leuchten- bzw. Blitzeinrichtung, bei welcher der Energiespeicher in wenigstens zwei Energieteilspeicher aufgeteilt ist, die jeweils in ihrer Spannung separat geregelt werden können. Da die Farbtemperatur durch die Beiträge der verschiedenen Energiespeicher variiert werden kann, kann bei entsprechender Aufteilung der Energiespeicher die Farbtemperatur in gewissen Grenzen konstant gehalten werden.

Aus US-PS 3,944,877 ist schließlich bekannt, innerhalb eines Entladevorgangs bei einem Blitzgerät den Strom zeitweise zu vergrößern oder zu verkleinern. Die Frage der Farbtemperatur des erzeugten Blitzlichtes ist in diesem Zusammenhang jedoch nicht angesprochen.

Der Erfindung liegt die Aufgabe zugrunde, ein Verfahren zur Steuerung eines Blitzlichtgerätes mit den Merkmalen des Oberbegriffes des Anspruchs 1 derart weiterzubilden, daß die Farbtemperatur des erzeugten Blitzlichtes ohne Veränderung der Lichtmenge unter voller Ausnutzung des apparativ vorgegebenen Leistungsbereichs in gewissen Einstellgrenzen variierbar ist.

Diese Aufgabe wird durch die kennzeichnenden Merkmale des Verfahrensanspruches 1 gelöst, vorteilhafte Weiterbildungen des Verfahrens ergeben sich aus den Unteransprüchen 2 -6.

Ein Blitzgerät mit den Merkmalen des Patentanspruches 7 sowie den nachfolgenden Unteransprüche 8 - 17 ermöglicht den Einsatz des vorbezeichneten Verfahrens gemäß Anspruch 1.

Als Kern der Erfindung wird es angesehen, daß zur gezielten Veränderung der Farbtemperatur des Blitzlichtes ohne Beeinflussung der Beleuchtungsstärke zwei Teilkapazitäten zu verwenden, die zur Herbeiführung einer Blauverschiebung in Reihe und zur Herbeiführung einer Rotverschiebung parallelgeschaltet werden und dabei vorzusehen, daß eine Umschaltung zwischen Parallelschaltung und Reihenschaltung und umgekehrt während der Blitzdauer möglich ist.

Die Erfindung nutzt somit die Erkenntnis aus, daß die Zuführung erhöhter Spannung zur Entladungsröhre zu einem härteren, in der Amplitude höheren Einsatz des Entladeimpulses führt, woraus eine Blauverschiebung des ansonsten sonnenlichtähnlichen Spektrums der Normalentladung folgt. Dämpft man dagegen den Entladevorgang ab, was durch eine Verlangsamung der Entladung geschehen kann, so wird der hohe kurze Entladungsimpuls auf einem relativ niederen, langen Entladungsimpuls gestreckt, wodurch die langwelligen Rotanteile des Spektrums stärker hervortreten. Insgesamt resultiert daraus eine Rotverschiebung des ansonsten sonnenlichtähnlichen Spektrums der Xenon-Blitzentladungsröhre.

Vorteilhafterweise wird die Variation durch ein die Entladungsparameter des Entladeimpulses beeinflussendes Netzwerk im Entladestromkreis des Blitzgerätes erzielt. Das Netzwerk kann elektronische Schaltelemente enthalten, die einerseits geeignet sind, den Impuls kürzer und härter ablaufen zu lassen, was eine Blauverschiebung zur Folge hätte, oder entladeimpulsdämpfend zu wirken, was eine Rotverschiebung zur Folge hätte. Durch gezielte einstellbare Mischung der beiden Effekte, kann die Farbtemperatur kontinuierlich über einen relativ weiten Bereich geregelt werden. Es ist entweder möglich, innerhalb eines Entladevorganges nach einer ersten Entladungsphase mit normalem oder insbesondere induktiv verzögertem Anfangsimpulsverlauf eine beschleunigte Entladungsphase mit erhöhter Spannung einzuschalten. Umgekehrt kann aber auch nach einer ersten beschleunigten Entladungsphase mit erhöhter Spannung eine verzögerte Restentladungsphase eingeschaltet werden. Je nach Länge der jeweiligen Phasen lassen sich damit die Blau- und Rotverstärkungsanteile beliebig miteinander mischen, so daß ein breites Variationsspektrum zur Verfügung steht.

Um bei der Variation der Farbtemperatur die Beleuchtungsstärke unbeeinflußt zu lassen, wird verfahrensgemäß bei einer Impulsverlängerung eine Absenkung der Spannungserhöhung bzw. bei einer Impulsverkürzung eine zugehörige Spannungserhöhung automatisch eingestellt, so daß das Integral unter der Entladungskurve nicht verändert wird.

Es ist auch möglich, jede Teilkapazität aus einer Gruppe von Kondensatoren zu bilden, die zur Variation der Blitzleistung innerhalb eines vorgegebenen Leistungsbereiches unter Beibehaltung der Variationsmöglichkeit der Farbtemperatur in Untergruppen oder einzel gezielten auf- oder entladbar sind. Dieses Verfahren macht es möglich, dem Fotografen ein Blitzgerät an die Hand zu geben, das quasi zwei Verstellmöglichkeiten hat, nämlich einmal eine Verstellmöglichkeit, beispielsweise in Form eines Drehknopfes zur kontinuierlichen oder quasikontinuierlichen Einstellung der Farbtemperatur, zum anderen einen Einstellknopf zu einer kontinuierlichen oder quasikontinuierlichen Verstellung der Blitzleistung. Wird die Blitzleistung verstellt, so soll sich dadurch eben.gerade nicht die Farbtemperatur verändern. Wird die Farbtemperatur verstellt, so soll sich dabei die Blitzleistung nicht verändern. Dies ist durch das Verfahren möglich.

Bei einem Blitzgerät, mit dem das vorbezeichnete Verfahren durchgeführt werden kann, das wenigstens eine aufladbare Entladekapazität, eine zündbare Entladungslampe sowie ein die Entladekapazität und die Blitzentladungslampe verbindendes Netzwerk mit elektronischen Schaltelementen aufweist, ist nun die Entladekapazität in zwei Teilkapazitäten geteilt, wobei zwischen den Teilkapazitäten ein erstes elektronisches Schaltelement vorgesehen ist, so daß bei Durchschaltung des ersten Schaltelementes das Netzwerk die Teilkapazitäten hintereinander geschaltet sind und bei Nichtdurchschaltung des ersten elektronischen Schaltelementes über Endkopplungsdioden eine Parallelschaltung der beiden Teilkapazitäten vorliegt. Ferner ist im Netzwerk eine die Blitzentladung verzögernde Induktivität vorgesehen, die bei Durchschaltung eines zweiten elektronischen Schaltelementes überbrückbar ist. Mithin sind nur zwei elektronische Schaltelemente in Verbindung mit der Induktivität und den beiden Teilkapazitäten ausreichend, um die Normalentladung entweder in den blauen oder in den roten Bereich hinein zu verzerren. Wesentlich für die Verzerrung der Normalentladung ist es, wann bezogen auf die Blitzzündung zum Zeitpunkt die beiden elektronischen Schaltelemente durchgeschaltet werden. Beispielsweise erreicht man eine maximale Blauverschiebung dann, wenn beide Tyristoren zum Zeitpunkt $t_o$ gezündet werden. Dann ist die Induktivität, die eine Verzögerung des Impulsverlaufes besorgen könnte kurzgeschlossen und die beiden Teilkapazitäten hintereinander geschaltet, woraus ein kurzer Impuls mit hoher Zündspannung resultiert.

Eine Normalentladung (bezogen auf die normale kapazitive Auslegung des Gesamtgerätes) wird dann abbrennen, wenn nur das zweite Schaltelement zum Zeitpunkt $t_o$ gezündet wird, nicht hingegen das erste. Somit liegt über den gesamten Entladungsvorgang eine Parallelschaltung der beiden Teilkapazitäten vor, die sich normal entladen können, da die Induktivität durch Überbrückung abgeschaltet ist.

Werden weder das erste noch das zweite Schaltelement gezündet, dann wird der Normalentladungszustand gedehnt, die Rotlichtanteile kommen stärker zum Tragen, das aus der Blitzröhre herauskommende Licht ist rotverschoben.

Ein weiterer vorteilhafter Aspekt der Erfindung liegt darin, zur Leistungsbeeinflussung kapazitiv eine Mehrzahl von Teilkapazitäten zu- und abschaltbar zu gestalten, was ohne Veränderung der Farbtemperatur vorgenommen werden kann.

Die Erfindung ist anhand von Ausführungsbeispielen in den Zeichnungsfiguren näher erläutert. Diese zeigen:

Fig. 1        eine Entladekurve eines Kondensators über eine gezündete Blitzröhre (Normalentladung);

Fig. 2        eine durch ein Netzwerk manipulierte Kurvenform zur Verstärkung der Blauanteile des Blitzlichtes;

Fig. 3        durch ein Netzwerk manipulierte Kurvenform zum Verstärken der Rotanteile;

Fig. 4        ein Prinzipschaltbild eines Blitzgerätes, mit welchem die Farbtemperatur unter Beibehaltung der Leistung variierbar ist;

Fig. 5        ein Prinzipschaltbild eines Blitzgerätes, bei welchem Farbtemperatur und Leistung einstellbar sind.

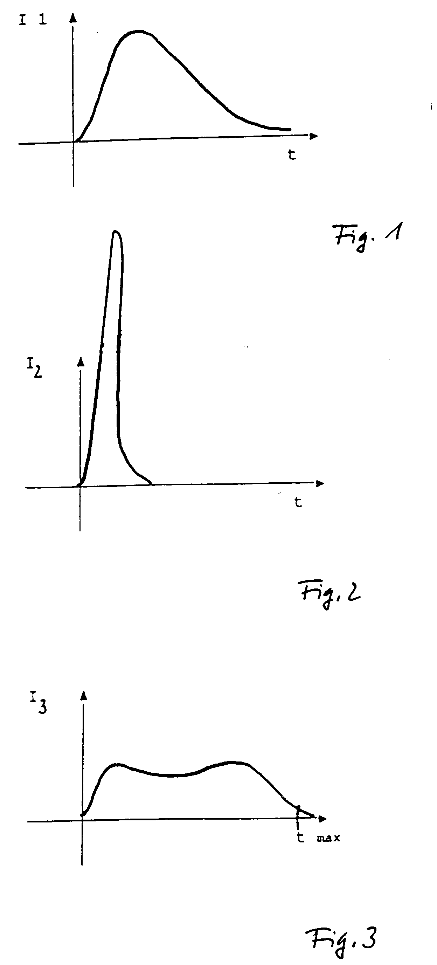

Zunächst wird auf die Figuren 1 -3 Bezug genommen. Bei der heute angewandten Technik von Blitzgeräten wird ein Kondensator auf Betriebsspannung aufgeladen, beispielsweise auf 500 V. Durch einen Hochspannungsimpuls wird das Xenongas der Blitzröhre ionisiert und führt zum Durchschlag der Röhre. Dabei wird Licht mit hoher Intensität für kurze Zeit ausgestrahlt. Der Lampenstrom reißt ab, sobald die Anodenspannung einen unterkritischen Wert erreicht hat bzw. die Leistungskondensatoren bis auf etwa 10 - 80 V entladen sind. Während des Entladevorganges ändert sich der dynamische Innenwiderstand der Röhre stark. Während der Zündphase ist die Röhre relativ hochohmig, bis die Ladespannung der Kondensatoren erreicht ist. Sobald diese Spannung erreicht ist, fällt der Widerstand stark ab. Der Maximalstrom bestimmt die Abbrennzeit der Röhre. Die Länge der Abbrennzeit ist abhängig von der Länge der verwendeten Leitungen, von Übergangswiderständen sowie vom Innenwiderstand der Röhre. Die in Fig. 1 dargestellte Kurve ist eine "Normalentladung", die sich dann einstellt, wenn die geschilderten Umstände vorliegen und keine künstlichen Verzerrungen der Entladung vorgenommen werden.

Bezogen auf die in Fig. 1 dargestellte Länge der Abbrennzeit der Röhre ist die in Fig. 2 dargestellte Länge sehr viel kürzer, jedoch ist der Abbrennimpuls sehr viel höher, da die der Röhre zugeführte Spannung höher ist und deswegen die Entladung härter und schneller abläuft.

Der in Fig. 3 dargestellte Entladungsverlauf ist hingegen sehr viel flacher als die gemäß Fig. 1 und 2, jedoch länger. Wesentlich ist für alle drei Kurven, daß folgende Gleichung gilt:

$$\int_0^{t_{max}} I_1(t)\, dt \approx \int_0^{t_{max}} I_2(t)\, dt \approx \int^{t_{max}} I_3(t)\, dt$$

$$t_{max} \leq 16\ ms$$

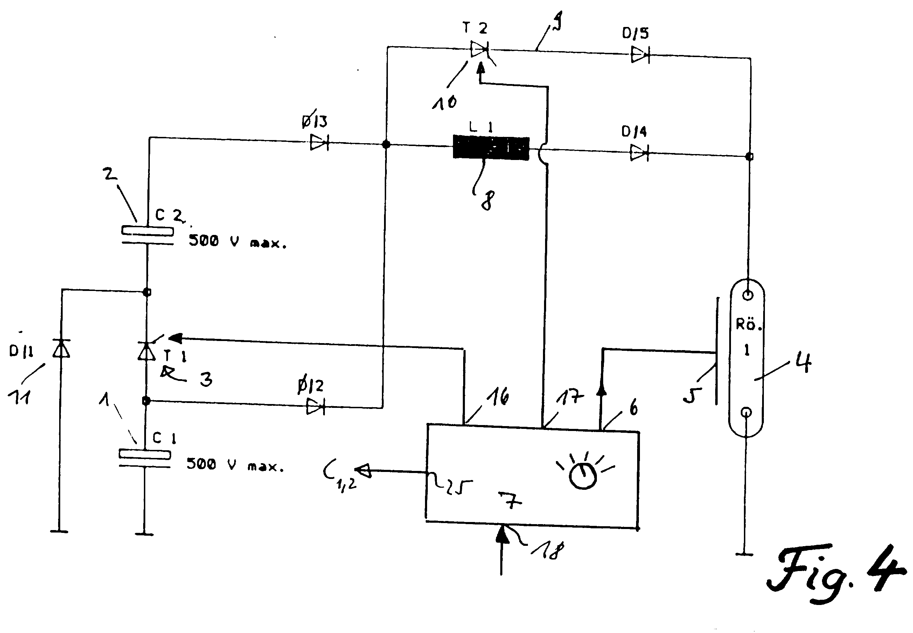

In Fig. 4 ist nun als Prinzipschaltbild dargestellt, wie die drei Abbrennkurven gemäß Fig. 1 - 3 eingestellt werden können.

Zunächst sind mit 1 und 2 zwei Teilkapazitäten C 1 und C 2 bezeichnet, die über ein erstes elektronisches Schaltelement 3, nämlich einen Tyristor T 1 in Reihe miteinander verbindbar sind, wenn der Tyristor durchgeschaltet ist. Die beiden Teilkapazitäten liegen in einem Entladekreis mit einer Entladeröhre 4, die eine Zündelektrode 5 aufweist, die an einem Ausgang 6 eines noch näher zu erläuternden Steuergerätes 7 angeschlossen ist.

Im Entladestromkreis ist ferner eine Induktivität 8 vorgesehen, die über einen Parallelzweig 9 mit einem zweiten elektronischen Schaltelement 10 überbrückbar ist. Das zweite elektronische Schaltelement 10 ist ein zweiter Tyristor T 2 .

Parallel über die erste Teilkapazität C 1 ist eine Parallelverzweigung geführt, die eine Diode 11 enthält. Die Anoden der beiden Kondensatoren sind mit weiteren Dioden 12 und 13 verbunden. Im Stromkreis und im Parallelzweig 9 sind ferner Dioden 14 und 15 angeordnet.

Die Tyristoren, die die beiden elektronischen Schaltelemente 3 und 10 bilden, werden durch Ausgänge 16 bzw. 17 in der Steuerung 7 gezündet. Der gesamte Blitzvorgang ist über einen mit einer Kamera verbindbaren Eingang 18 an der Steuerung 7 einleitbar.

Abhängig von den Ausgangssignalen an den Ausgängen 16 und 17 bezogen auf den Ausgang 6 der Steuerung erfolgt nun im Entladestromkreis entweder eine Normalentladung, eine blauverschobene Entladung, eine rotverschobene Entladung oder Mischungen daraus. Wird beispielsweise der Ausgang 6 getriggert, nicht hingegen jedoch die Ausgänge 16 und 17, wird daraus ein Entladevorgang entsprechend Fig. 3 resultieren. Wird Ausgang 6 getriggert, sodann innerhalb der Entladezeit etwas später Ausgang 16, Ausgang 17 jedoch nicht gezündet, so wird erst die Entladung gemäß Fig. 3 ablaufen und sodann nach Triggerung des Ausganges 16 ein Entladungspeak überlagert, der ähnlich der Fig. 2 verläuft.

Wird zusammen mit Ausgang 6 hingegen nur Ausgang 17 getriggert und damit der zweite Tyristor über den Entladezeitraum gezündet gehalten, dann wird die Induktivität 8 kurzgeschlossen. Wird während des Abbrennens der Röhre das elektronische Schaltelement 3 gezündet, so wird der kurze harte Entladungspeak der Normalentladung der Fig. 1 überlagert.

Die relativen Zündzeitpunkte der Ausgänge 16 und 17 bezogen auf den des Ausganges 6 sollen durch einen Regelknopf 20 eingebbar sein, über den somit eine kontinuierliche Verschiebung der Farbtemperaturwerte möglich ist.

Die Steuerung 7 weist ferner noch einen weiteren Ladeausgang 25 für die Kapazitäten 1 und 2 auf.

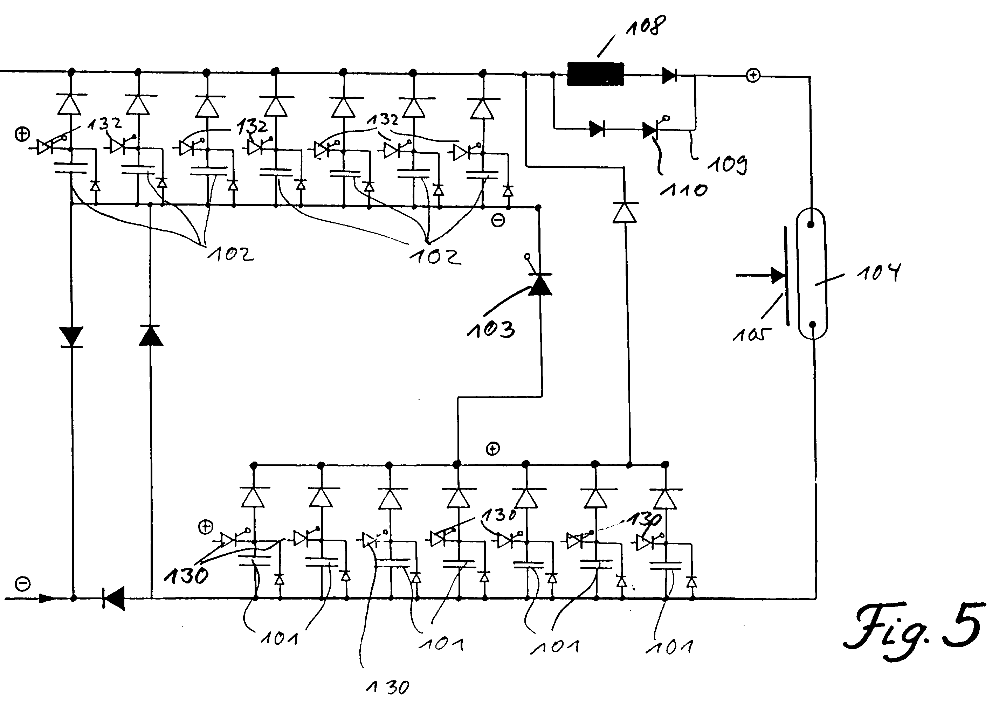

Bei dem in Fig. 5 dargestellten Ausführungsbeispiel werden nun die Teilkapazitäten 1 und 2 gemäß Fig. 4 durch Unterkapazitäten 101 und 102 gebildet, wobei jede Teilkapazität 101 bzw. 102 gesondert über Ladetyristoren 130 und 132 aufladbar ist. Damit kann über Variation der zu entladenen Kapazität unter Beibehaltung der Variationsmöglichkeit für die Farbtemperaturregelung auch die Leistung des Blitzgerätes geregelt werden.

Ansonsten sind in Fig. 5 gleiche Bauteile wie in Fig. 4 mit gleichen Bezugszeichen, allerdings erhöht um 100 bezeichnet.

## Patentansprüche

1. Verfahren zur Steuerung eines Blitzgerätes zur Ergänzung von Blitzlicht von vorgegebener Farbtemperatur, insbesondere einer aus über einen Blitzgenerator angesteuerten Blitzköpfen gebildeten Studioblitzanlage, bei welchem der der/den Blitzröhre(n) aus einer Kapazität zugeführte Entladeimpuls sowohl betreffend seiner Impulsdauer als auch betreffend seiner Amplitude gezielt variierbar ist, wobei die Kapazität aus mindestens zwei Teilkapazitäten (1, 2) besteht,
   **dadurch gekennzeichnet,**
   daß die mindestens zwei Teilkapazitäten (1, 2) zur Herbeiführung einer Blauverschiebung in Reihe und zur Herbeiführung einer Rotverschiebung parallel geschaltet werden und daß die Umschaltung zwischen Parallelschaltung und Reihenschaltung und umgekehrt während der Blitzdauer mit zeitlicher Variabilität bezogen auf die Blitzzündung erfolgen kann.

2. Verfahren nach Anspruch 1,
   **dadurch gekennzeichnet,**
   daß zur Verstärkung der Rotverschiebung eine den Entladeimpuls verzögernde Induktivität (8) zugeschaltet wird.

3. Verfahren nach Anspruch 2,
   **dadurch gekennzeichnet,**
   daß nach einer ersten Entladephase bei parallelgeschalteten Teilkapazitäten mit normalem oder induktiv verzögertem Anfangsimpulsverlauf eine beschleunigte Entladungsphase mit erhöhter Spannung bei hintereinandergeschalteten Teilkapazitäten eingeschaltet wird.

4. Verfahren nach Anspruch 2,
   **dadurch gekennzeichnet,**
   daß nach einer ersten beschleunigten Entladungsphase mit erhöhter Spannung eine induktiv verzögerte Entladungsphase eingeschaltet wird.

5. Verfahren nach einem der vorhergehenden Ansprüchen,
   **dadurch gekennzeichnet,**
   daß bei manueller Variation der Impulsdauer bzw. der Amplitude des Entladeimpulses zur Beibehaltung der ursprünglichen gewählten Blitzenergie die zugehörige Amplitude bzw. Impulsdauer automatisch eingestellt wird.

6. Verfahren nach einem der vorhergehenden Ansprüche,
   **dadurch gekennzeichnet,**
   daß jede Teilkapazität aus einer Gruppe von Kondensatoren besteht, die zur Variation der Blitzleistung innerhalb eines vorgegebenen Leistungsbereiches unter Beibehaltung der Variationsmöglichkeit der Farbtemperatur in Untergruppen oder einzelnen gezielt aufladbar und/oder entladbar sind.

7. Blitzgerät zur Durchführung des Verfahrens nach Anspruch 1, insbesondere eine aus mindestens einem Blitzkopf und einem Blitzgenerator bestehende Studioblitzanlage, mit

   - mindestens einer aufladbaren Entladekapazität,
   - mindestens einer zündbaren Blitzentladungslampe sowie
   - einem die Entladekapazität und die Blitzentladungslampe verbindenden Netzwerk, das elektronische Schaltelemente aufweist, wobei die Entladekapazität mindestens zwei Teilkapazitäten (1, 2) aufweist,

   **dadurch gekennzeichnet,**
   daß die Teilkapazitäten bei Durchschaltung eines ersten elektronischen Schaltelementes (3) des Netzwerkes zur Erzeugung einer Blauverschiebung des Blitzlichtes hintereinanderschaltbar sind und bei Nichtdurchschaltung des ersten elektronischen Schaltelementes (3) zur Erzeugung einer Rotverschiebung des Blitzlichtes über Entkopplungsdioden (12, 13) des Netzwerkes parallelgeschaltet sind, und daß das Netzwerk eine Steuerschaltung (7) aufweist, mit der das erste Schaltelement (3) mit zeitlicher Variabilität bezogen auf die Blitzzündung ansteuerbar ist.

8. Blitzgerät nach Anspruch 7,
   **dadurch gekennzeichnet,**
   daß zur Verstärkung der Rotverschiebung im Netzwerk ferner eine die Blitzentladung verzögernde Induktivität (8) vorgesehen ist, die bei Durchschaltung eines zweiten elektronischen Schaltelementes (10) überbrückbar ist.

9. Blitzgerät nach Anspruch 8,
   **dadurch gekennzeichnet,**
   daß das erste Schaltelement ein Thyristor ist.

10. Blitzgerät nach den Ansprüchen 8 - 9,
    **dadurch gekennzeichnet,**
    daß das zweite Schaltelement (10) ein Thyristor ist.

11. Blitzgerät nach den Ansprüchen 7 - 10,
    **dadurch gekennzeichnet,**
    daß die Steuerschaltung (7) geeignet ist zur Zündung der Schaltelemente (3, 10) mit zeitlicher Variabilität zueinander und bezogen auf die Blitzzündung.

12. Blitzgerät nach den Ansprüchen 10 - 11,
    **dadurch gekennzeichnet,**
    daß die Steuerschaltung (7) einen Mikroprozessor aufweist, der die Zündung der ersten und/oder zweiten Thyristoren (3, 10) programmgesteuert abhängig von der Blitzzündung einleitet.

13. Blitzgerät nach Anspruch 12,
    **dadurch gekennzeichnet,**
    daß eine manuelle Eingabevorrichtung (20) vorgesehen ist, über die der Programmablauf des Mikroprozessors derart beeinflußbar ist, daß durch Einstellung der Schaltzeitpunkte des ersten und zweiten Schaltelementes (3, 10) relativ zum Blitzzeitpunkt die Farbtemperatur des Blitzlichtes kontinuierlich einstellbar ist.

14. Blitzgerät nach Anspruch 13,
    **dadurch gekennzeichnet,**
    daß die Eingabevorrichtung ein den Prozessorablauf beeinflussender Regelknopf (20) ist, mit dem eine kontinuierliche Verstellung der Farbtemperatur vornehmbar ist.

15. Blitzgerät nach Anspruch 13,
    **dadurch gekennzeichnet,**
    daß die Eingabevorrichtung aus mindestens einer Drucktaste besteht, mit der eine kontinuierliche oder quasi kontinuierliche Verstellung der Farbtemperatur vornehmbar ist.

**16.** Blitzgerät nach den Ansprüchen 7 - 15,
    **dadurch gekennzeichnet,**
daß jede Teilkapazität (1, 2) aus einer Mehrzahl von Unterkapazitäten (101, 102) besteht, die einzeln oder in Gruppen aufladbar und/oder zur Variation der Blitzenergie unter Beibehaltung der gezielten Variationsmöglichkeiten der Farbtemperatur entladbar sind.

**17.** Blitzgerät nach Anspruch 16,
    **dadurch gekennzeichnet,**
daß die Auf- und die Entladung der Untergruppen der beiden Teilkapazitäten (1, 2 ) jeweils parallel und gleichzeitig erfolgt.

**Claims**

1. Method of controlling a flash device for supplying flash-light of a predetermined colour temperature, particularly a studio flash system formed by flash heads controlled by means of a flash generator, in which the discharge pulse supplied to the flash bulb(s) from a capacitance is variable selectively both with regard to its pulse duration and with regard to its amplitude, and in which the capacitance is composed of at least two partial capacitances (1, 2), characterized in that the at least two partial capacitances (1, 2) are connected in series in order to bring about a blue shift and in parallel in order to bring about a red shift, and in that switching between parallel connection and series connection and vice versa can take place during the duration of the flash with variability of timing relative to the triggering of the flash.

2. Method according to Claim 1,
characterized in that in order to amplify the red shift, an inductance (8) is connected for slowing down the discharge pulse.

3. Method according to Claim 2,
characterized in that after a first discharge stage with the partial capacitances connected in parallel and with a normal or inductively slowed initial pulse progression, an accelerated discharge stage is put into operation with increased voltage and with the partial capacitances connected in series.

4. Method according to Claim 2,
characterized in that after a first accelerated discharge phase with increased voltage, an inductively slowed discharge phase is put into operation.

5. Method according to any one of the preceding claims, characterized in that with manual variation of the pulse duration or of the amplitude of the discharge pulse, the associated amplitude or pulse duration is automatically adjusted in order to maintain the originally selected flash energy.

6. Method according to any one of the preceding claims, characterized in that each partial capacitance consists of a group of capacitors which can be charged and/or discharged selectively in sub-groups or individually in order to vary the power of the flash within a predetermined power range whilst maintaining the ability to vary the colour temperature.

7. Flash device for implementing the method according to Claim 1, particularly a studio flash system consisting of at least one flash head and one flash generator, with

- at least one chargeable discharge capacitance;
- at least one flash discharge lamp which can be triggered; and
- a network connecting the discharge capacitance and the flash discharge lamp and comprising electronic circuit elements, in which the discharge capacitance comprises at least two partial capacitances (1, 2),

characterized in that the partial capacitances can be connected in series to bring about a blue shift of the flashlight when a first electronic circuit element (3) of the network is made conductive and are connected in parallel by decoupling diodes (12, 13) of the network to bring about a red shift of the flashlight when the first electronic circuit element (3) is not conductive, and in that the network includes a control circuit (7) by which the first circuit element (3) can be controlled with variability of timing relative to the triggering of the flash.

8.  Flash device according to Claim 7,
    characterized in that in order to amplify the red shift, an inductance (8) slowing down the flash discharge is also provided in the network and can be shorted out when a second electronic circuit element (10) is made conductive.

9.  Flash device according to Claim 8,
    characterized in that the first circuit element is a thyristor.

10. Flash device according to Claims 8-9,
    characterized in that the second circuit element (10) is a thyristor.

11. Flash device according to Claims 7-10,
    characterized in that the control circuit (7) is suitable for triggering the circuit elements (3, 10) with variability of timing relative to one another and relative to the triggering of the flash.

12. Flash device according to Claims 1-11,
    characterized in that the control circuit (7) comprises a microprocessor which initiates the triggering of the first and/or second thyristors (3, 10) in a program-controlled manner in dependence on the triggering of the flash.

13. Flash device according to Claim 12,
    characterized in that a manual input device (20) is provided, by means of which the flow of the microprocessor program can be influenced in a manner such that the colour temperature of the flashlight can be adjusted continuously by the adjustment of the switching times of the first and second circuit elements (3, 10) relative to the flash time.

14. Flash device according to Claim 13,
    characterized in that the input device is an adjustment knob (20) which influences the processor flow and with which a continuous adjustment of the colour temperature can be carried out.

15. Flash device according to Claim 13,
    characterized in that the input device consists of at least one push-button with which a continuous or almost continuous adjustment of the colour temperature can be carried out.

16. Flash device according to Claims 7-15,
    characterized in that each partial capacitance (1, 2) consists of a plurality of sub-capacitances (101, 102) which can be charged and/or discharged individually or in groups in order to vary the flash energy whilst maintaining the colour-temperature variability aimed for.

17. Flash device according to Claim 16,
    characterized in that the charging and discharging of the sub-groups of the two partial capacitances (1, 2), respectively, take place in parallel and simultaneously.

**Revendications**

1.  Procédé pour commander un flash destiné à completer une lumière d'éclair d'une température prédéterminée de couleur, en particulier un système de flash de studio constitué de têtes de flash commandées par un générateur d'éclairs, dans lequel l'impulsion de décharge envoyée au ou aux tubes de flash à partir d'un condensateur peut être modifié de façon ciblée aussi bien par rapport à sa durée d'impulsion qu'à son amplitude, dans lequel le condensateur consiste en au moins deux condensateurs partiels (1, 2),
    caractérisé en ce que
    les au moins deux condensateurs partiels (1, 2) sont branchés en série pour l'obtention d'un décalage vers le bleu et en parallèle pour l'obtention d'un décalage vers le rouge, et que la commutation entre le branchement en parallèle et le branchement en série et vice versa peut avoir lieu pendant la durée d'un éclair avec une variabilité dans le temps par rapport à l'amorçage de l'éclair.

**2.** Procédé selon la revendication 1,

caractérisé en ce que

pour renforcer le décalage vers le rouge, une inductance (8) retardant l'impulsion de décharge est insérée dans le circuit.

**3.** Procédé selon la revendication 2,

caractérisé en ce que

après une première phase de décharge avec les condensateurs partiels branchés en parallèle et le déroulement d'une impulsion initiale normale ou retardée de manière inductive, on commute sur une phase accélérée de décharge avec une tension accrue au moyen de condensateurs partiels branchés en série.

**4.** Procédé selon la revendication 2,

caractérisé en ce que

après une première phase de décharge accélérée avec une tension accrue, on commute sur une phase de décharge retardée de manière inductive.

**5.** Procédé selon l'une quelconque des revendications précédentes,

caractérisé en ce que

lors d'une variation manuelle de la durée d'impulsion ou de l'amplitude de l'impulsion de décharge, pour conserver l'énergie d'éclair choisie initialement l'amplitude ou la durée d'impulsion sont ajustées automatiquement.

**6.** Procédé selon l'une quelconque des revendications précédentes,

caractérisé en ce que

chaque condensateur partiel est constitué d'un groupe de condensateurs qui, pour faire varier la puissance de l'éclair dans une gamme prédéterminée de puissance tout en conservant la possibilité de variation de la température de couleur, peuvent être chargés et/ou déchargés en sous-groupes ou séparément.

**7.** Appareil de flash pour la mise en oeuvre du procédé selon la revendication 1, et en particulier système de flash de studio constitué d'au moins une tête de flash et d'un générateur d'éclairs, comprenant

- au moins un condensateur de décharge rechargeable
- au moins une lampe-éclair à décharge pouvant être amorcée ainsi que
- un réseau reliant le condensateur de décharge et la lampe-éclair à décharge, qui présente des éléments électroniques de commutation, dans lequel le condensateur de décharge comprend au moins deux condensateurs partiels (1, 2),

caractérisé en ce que

les condensateurs partiels, lors d'une activation d'un premier élément électronique de commutation (3) du réseau pour produire un décalage vers le bleu de l'éclair, peuvent être branchés en série, et que, lors d'une non-activation du premier élément électronique de commutation (3) pour produire un décalage vers le rouge de l'éclair, peuvent être branchés en parallèle par l'intermédiaire de diodes de découplage (12, 13) du réseau, et que le réseau comporte un dispositif de commande (7) au moyen duquel le premier élément électronique de commutation (3) peut être commandé avec une possibilité de variation dans le temps par rapport à l'amorçage de l'éclair.

**8.** Appareil de flash selon la revendication 7,

caractérisé en ce que

pour renforcer le décalage vers le rouge, une inductance (8) retardant la décharge de l'éclair est prévue en outre dans le réseau, qui peut court-circuitée lors d'une activation d'un deuxième élément électronique de commutation (10).

**9.** Appareil de flash selon la revendication 8,

caractérisé en ce que

le premier élément de commutation est un thyristor.

**10.** Appareil de flash selon les revendications 8 ou 9,

caractérisé en ce que

le deuxième élément de commutation (10) est un thyristor.

**11.** Appareil de flash selon les revendications 8 à 10,
   caractérisé en ce que
   le dispositif de commande (7) est conçu pour un déclenchement des éléments de commutation (3, 10) avec une possibilité de variation dans le temps l'un par rapport à l'autre et par rapport au déclenchement de l'éclair.

**12.** Appareil de flash selon les revendications 10 ou 11,
   caractérisé en ce que
   le dispositif de commande (7) comprend un microprocesseur qui, commandé par un programme, commence l'amorçage du premier et/ou du deuxième thyristor (3, 10) en fonction du déclenchement de l'éclair.

**13.** Appareil de flash selon la revendications 12,
   caractérisé en ce que
   un dispositif d'introduction manuelle (20) est prévu au moyen duquel le déroulement de programme du microprocesseur peut être influencé, afin que par un réglage des instants de commutation des premier et deuxième éléments de commutation (3, 10) par rapport à l'instant de l'éclair la température de couleur de la lumière d'éclair puisse être réglée de manière continue.

**14.** Appareil de flash selon la revendication 13,
   caractérisé en ce que
   le dispositif d'introduction est un bouton de réglage (20) influençant le fonctionnement du processeur avec lequel un réglage continu de la température de couleur peut être effectué.

**15.** Appareil de flash selon la revendication 13,
   caractérisé en ce que
   le dispositif d'introduction consiste en au moins un bouton-poussoir avec lequel un réglage continu ou quasi continu de la température de couleur peut être effectué.

**16.** Appareil de flash selon les revendications 7 à 15,
   caractérisé en ce que
   chaque condensateur partiel (1, 2) est constitué d'une pluralité de condensateurs divisionnaires (101, 102) qui peuvent être chargés et/ou déchargés séparément ou en groupes pour faire varier l'énergie d'éclair tout en conservant les possibilités de variation intentionnelle de la température de couleur.

**17.** Appareil de flash selon la revendication 16,
   caractérisé en ce que
   la charge et la décharge des sous-groupes des deux condensateurs partiels (1, 2) ont lieu en parallèle et simultanément.

I 1

Fig. 1

$I_2$

Fig. 2

$I_3$

t max

Fig. 3

11

Fig. 4

Fig. 5